(19) Europäisches Patentamt
European Patent Office
Office européen des brevets

(11) Veröffentlichungsnummer: **0 312 004 A2**

(12) **EUROPÄISCHE PATENTANMELDUNG**

(21) Anmeldenummer: **88116922.1**

(22) Anmeldetag: **12.10.88**

(51) Int. Cl.⁴: **C09D 11/00 , C09B 69/00 , C09B 62/503**

(30) Priorität: **13.10.87 DE 3734528**

(43) Veröffentlichungstag der Anmeldung: **19.04.89 Patentblatt 89/16**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Ritter, Josef, Dr.**
**Berliner Strasse 12**
**D-6238 Hofheim am Taunus(DE)**
Erfinder: **Sieber, Alexander, Dr.**
**Wartburgstrasse 76**
**D-6230 Frankfurt am Main 80(DE)**

(54) **Verwendung von Farbmitteln für Aufzeichnungsflüssigkeiten.**

(57) Die erfindungsgemäße Verwendung von wasserlöslichen Farbstoffen zum Färben von Aufzeichnungsflüssigkeiten, insbesondere für das Ink-Jet-Verfahren, ist dadurch gekennzeichnet, daß den Farbstoffen in Form der freien Säure die allgemeine Formel $A\text{-}(SO_2\text{-}X)_p$ zukommt, worin A für einen üblichen farbgebenden und mindestens eine Sulfonsäuregruppe tragenden Rest aus der Klasse der Mono-oder Disazofarbstoffe oder deren Komplexe mit Chrom, Eisen, Kobalt oder Kupfer, der Kupfer- oder Nickelphthalocyanine, Anthrachinone, Dioxazine oder Kupfer-Formazan-Komplexe steht, p 1, 2, 3 oder 4 ist und
X für eine Vinylgruppe oder für einen Rest der Formeln $-CH_2CH_2OR^1$, $-CH_2CH_2NR^1R^2$, $-CH_2CH_2SR^1$, $-CH_2CH_2NR^1NR^2R^3$ und

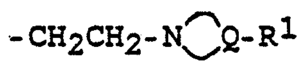

steht, in denen $R^1$, $R^2$ und $R^3$ unabhängig voneinander H, den Rest der Formel $-CH_2CH_2\text{-}SO_2\text{-}A$ oder einen gegebenenfalls substituierten Alkyl-, Cycloalkyl-, Aralkyl- oder Arylrest oder einen gegebenenfalls substituierten Rest eines aliphatischen oder aromatischen heterocyclischen Systems und Q zusammen mit dem Stickstoffatom ein gegebenenfalls substituiertes aliphatisches oder aromatisches heterocyclisches System bedeuten,
oder daß X für einen Rest der Formel

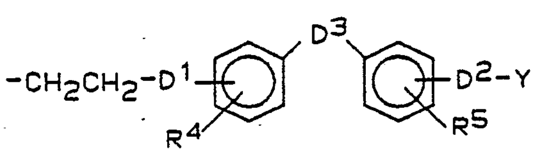 (IIf)

steht, in der
$D^1$ und $D^2$ unabhängig voneinander O, sek.-$NH_2$ oder tert.-$NH_2$, $D^3$ eine direkte Bindung, sek.-$NH_2$ oder tert.-$NH_2$, Alkylen, eine Gruppe der Formel -O-, -S-, -SO-, $-SO_2-$ oder -CO-, $R^4$ und $R^5$ unabhängig voneinander $C_1$-$C_{18}$-Alkyl, $C_1$-$C_{18}$-Alkoxy, COOH, $SO_3H$ oder Cl und Y, H oder den Rest $-CH_2CH_2\text{-}SO_2\text{-}A$

EP 0 312 004 A2

bedeuten, oder daß X für den Rest der Formel

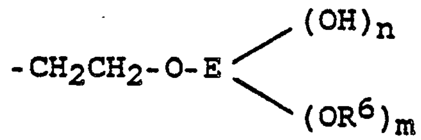

steht, in der E ein weiter nicht substituierter oder ein weiter substituierter geradkettiger, verzweigter oder cyclischer Kohlenwasserstoffrest mit Heteroatomen oder ohne Heteroatome,
$R^6$ Wasserstoff oder ein Rest der Formel $-CH_2CH_2-SO_2-A$ sowie n und m jeweils ganze Zahlen von 0 bis 12 mit einer Gesamtzahl von 2 bis 12 sind.

Die erfindungsgemäß verwendeten Farbstoffe können in an sich bekannter Weise analog Vinylsulfon- oder $\beta$-Sulfatoethylsulfonfarbstoffen hergestellt werden, wobei die Reaktivgruppen mit Nucleophilen wie $R^1OH$, $HNR^1R^2$, $HSR^1$ etc. umgesetzt werden. Teilweise werden dabei neue Farbstoffe erhalten.

## Verwendung von Farbmitteln für Aufzeichnungsflüssigkeiten

Die Erfindung betrifft das technische Gebiet der Farbmittel zur Verwendung in Aufzeichnungsflüssigkeiten für Schreib-und Aufzeichnungsgeräte. Insbesondere betrifft die Erfindung wäßrige Tinten für Tintenstrahldruck-Verfahren (Ink-Jet-Verfahren).

Unter dem Ink-Jet-Verfahren versteht man ein Aufzeichnungssystem, bei dem einzelne Tintentröpfchen in kontrollierter Weise aus einer schmalen Düse auf ein Aufzeichnungsmaterial, z.B. Papier, gespritzt werden. Dabei bleiben die aufgesprühten Tintentröpfchen auf dem Aufzeichnungsmaterial haften und bilden so die gewünschte Information ab. In der Praxis werden heute verschiedene Methoden zur Erzeugung und Steuerung der Tintentröpfchen angewendet. So kann z.B. die Erzeugung des Tröpfchenstrahls kontinuierlich erfolgen, wobei in den Schreibpausen der Tintenstrahl in einen Auffangbehälter abgelenkt und die Tinte rezyklisiert wird. In einer anderen Ausführung des Verfahrens trifft jedes erzeugte Tröpfchen das Aufzeichnungsmaterial; es werden jedoch nur Tröpfchen produziert, wenn tatsächlich geschrieben wird (drop-on-demand-Verfahren). Die Erzeugung der Tröpfchen kann durch kurzzeitige Druckerhöhung in einer Tintenkammer, die mit einer schmalen Düse versehen ist, beispielsweise mittels eines Piezo-Oszillators erfolgen. Es sind auch solche Systeme bekannt, bei denen die Energie zur Versprühung der Tröpfchen in Form von thermischer Energie der Tinte zugeführt wird.

Unabhängig davon, nach welchem Verfahren ein bestimmtes Tintenstrahl-Aufzeichnungssystem arbeitet, werden an die zu verwendende Tinte eine Reihe von Anforderungen gestellt. So muß die Tintenzusammensetzung sorgfältig abgestimmte physikalische Eigenschaften wie Viskosität, Oberflächenspannung und elektrische Leitfähigkeit, aufweisen, um sie für die Erzeugung der Tröpfchen und die Steuerung der Flugrichtung der Tröpfchen geeignet zu machen. Ein wichtiger Gesichtspunkt ist auch, daß sich in keinem Fall in der Tinte irgendwelche Feststoffe bilden dürfen, selbst wenn irgendein Bestandteil der Aufzeichnungsfüssigkeit verdampft oder sich die chemische Zusammensetzung der Tinte während einer langen Lagerung, während der Aufzeichnung oder während einer Aufzeichnungspause ändert.

Weiterhin soll das einmal aufgezeichnete Bild eine möglichst hohe Wasserbeständigkeit, Lichtbeständigkeit und Abriebfestigkeit aufweisen. Die bisher bekannten Tinten, insbesondere die wäßrigen Tinten, haben jedoch den Nachteil, daß sie auf dem Aufzeichnungsmaterial leicht verschmiert werden können, wenn sie angefeuchtet werden. Ein weiterer Nachteil besteht darin, daß die bekannten Tinten durch Licht oder mechanischen Abrieb oft schnell verblassen.

Im Fall von Tintenzusammensetzungen für den Mehrfarbendruck kommt als weiteres Problem hinzu, daß die den Tinten zugrundeliegenden Farbstoffe möglichst genau den drei Primärfarben Gelb, Cyan und Magenta entsprechen müssen. Dabei wird die Auswahl geeigneter Farbstoffe nicht nur durch die benötigte Nuance, sondern auch die erforderliche Reinheit des Farbtons und die gewünschte Brillanz der Farbwiedergabe eingeschränkt. Es sind viele Versuche unternommen worden, um Tinten im Hinblick auf die erwähnten Eigenschaften zu optimieren. Bis heute hat man jedoch keine derartige Tintenzusammensetzung finden können, die sämtliche gewünschten Eigenschaften in idealer Weise besitzt und in der Praxis eingesetzt werden kann.

Der Sachverhalt sei am Beispiel von Tinten in der Nuance Magenta näher erläutert. In herkömmlichen wäßrigen Magenta-Tinten werden z.B. Direktfarbstoffe, wie C.I. Direct Red 1, 11, 37, 62, 75, 81, 87, 89, 95 und 227, eingesetzt. Aus Direktfarbstoffen hergestellte Strahldrucktinten besitzen auf Grund der Substantivität der Direktfarbstoffe eine ausgezeichnete Wasserbeständigkeit. Sie haben vor allem zwei Nachteile: durch die geringe Löslichkeit von Direktfarbstoffen in Wasser kommt es während des kontinuierlichen Druckens oder bei intermittierender Verwendung leicht zur Verstopfung der Düsen durch ausgefallenen Farbstoff; auf Grund der durch Aggregation verursachten trüben Nuancen ist mit Direktfarbstoffen oft nur eine unbefriedigende Farbwiedergabe möglich.

Andererseits wurde auch die Verwendung saurer Farbstoffe, beispielsweise C.I. Acid Red, 1, 8, 52, 87, 94, 115, 131, 144, 152, 154, 186 und 245, vorgeschlagen. Mit sauren Farbstoffen hergestellte Tinten ermöglichen eine ausgezeichnete Farbwiedergabe. Allerdings ist die Haltbarkeit der damit gedruckten Bilder wegen der geringen Licht- und Wasserbeständigkeit unzureichend.

Aus der DE-A-36 14 462 und der DE-A-33 20 373 sind Aufzeichnungsflüssigkeiten für das Tintenstrahl-Aufzeichnungsverfahren bekannt, die auch Reaktivfarbstoffe enthalten können. Wasserlösliche Reaktivfarbstoffe vom Chlortriazinyl- oder $\beta$-Sulfatoethylsulfonyl-Typ besitzen jedoch in der Regel noch keine optimale Wasserbeständigkeit in den damit hergestellten Drucken auf Papier, wobei sich die Bildung von Sulfationen bzw. Chloridionen durch Hydrolyse an den Reaktivgruppen zusätzlich negativ auswirkt.

Aus der EP-A-0202656 ist bekannt, flüssige Farbstoffzubereitungen für Tintenstrahl-Druckverfahren einzusetzen, die Reaktivfarbstoffe vom Dispersionsfarbstofftyp enthalten. Die reaktiven Dispersionsfarbstoffe

müssen in wäßrigen Medium dispergiert werden und erfordern die Anwendung von auf den einzelnen Farbstoff abgestimmten Hilfsmittel, um in der flüssigen Zubereitung nicht auszuflocken. Die Farbstoffe werden bevorzugt für den Textildruck eingesetzt und unter alkalischen Bedingungen auf den Textilien fixiert. Wegen der geringen Wasserlöslichkeit dieser Reaktivfarbstoffe ist ihre Anwendung in Aufzeichnungsverfahren mit relativ hoher Auflösung, wie z.B. in Drop-on-Demand-Verfahren, praktisch ungeeignet. Außerdem sind diese bekannten Farbstoffzubereitungen wegen des hohen Gehalts an Hilfsmitteln für den Papierdruck wenig geeignet.

Es besteht daher ein Bedarf nach verbesserten Aufzeichnungsflüssigkeiten mit Farbmitteln, die im Ink-Jet-Verfahren eingesetzt werden können.

Gegenstand der Erfindung ist die Verwendung von wasserlöslichen Farbstoffen zum Färben von Aufzeichnungsflüssigkeiten, dadurch gekennzeichnet, daß den Farbstoffen in Form der freien Säure die allgemeine Formel (I) zukommt,

$A\text{-}(SO_2\text{-}X)_p$ (I)

worin A für einen üblichen farbgebenden und mindestens eine Sulfonsäuregruppe tragenden Rest aus der Klasse der Mono-oder Disazofarbstoffe oder deren Komplexe mit Chrom, Eisen, Kobalt oder Kupfer, der Kupfer- oder Nickel-Phthalocyanine, Anthrachinone, Dioxazine oder Kupfer-Formazan-Komplexe steht, p 1, 2, 3 oder 4 ist und X für eine Vinylgruppe oder für einen Rest der Formeln (IIa)-(IIe)

$-CH_2CH_2OR^1$ (IIa)

$-CH_2CH_2NR^1R^2$ (IIb)

$-CH_2CH_2SR^1$ (IIc)

$-CH_2CH_2NR^1NR^2R^3$ (IId) und

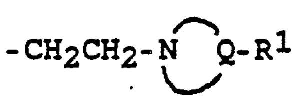

(IIe)

steht, in denen $R^1$, $R^2$ und $R^3$ unabhängig voneinander ein Wasserstoffatom, den Rest der Formel $-CH_2CH_2SO_2\text{-}A$, in der A die bei Formel (I) genannte Bedeutung hat, oder einen gegebenenfalls substituierten Alkyl-, Cycloalkyl-, Aralkyl-oder Arylrest oder einen gegebenenfalls substituierten Rest eines aliphatischen oder aromatischen heterocyclischen Systems und Q zusammen mit dem Stickstoffatom ein gegebenenfalls substituiertes aliphatisches oder aromatisches heterocyclisches System bedeuten, wobei die Reste $R^1$, $R^2$ und $R^3$ und der Heterocyclus aus N und Q insbesondere weiter unsubstituiert sind oder durch einen oder mehrere Reste aus der Gruppe Alkyl, Alkoxy, Aryl, Hydroxy, primäres, sekundäres und tertiäres Amino, Nitro, Sulfo, Carboxy, Alkyloxycarbonyl, Aminocarbonyl, Alkylaminocarbonyl, Alkanoylamino und Halogen substituiert sind.

Von den vorstehend genannten Farbstoffen sind solche besonders geeignet, bei denen $R^1$, $R^2$ und $R^3$ unabhängig voneinander Wasserstoff, Alkyl mit 1 bis 22 Kohlenstoffatomen, Cycloalkyl mit 5 oder 6 Ringatomen, Alkylphenyl mit 1 bis 22 Kohlenstoffatomen im Alkylrest, Phenyl, Naphtyl, ein heterocyclisches System mit 5 oder 6 Ringatomen oder aus zwei ankondensierten 5- oder 6-gliedrigen Ringen, von denen mindestens einer ein Heteroatom enthält, und Q zusammen mit dem Stickstoffatom ein aliphatisches heterocyclisches System bedeuten, wobei $R^1$, $R^2$ und $R^3$ und der Heterocyclus aus N und Q durch 1 bis 3 Reste, vorzugsweise einen Rest, aus der Gruppe $C_1$-$C_{22}$-Alkyl, $C_1$-$C_{22}$-Alkoxy, Phenyl, Tolyl, Hydroxy, Amino, Alkylamino und Dialkylamino mit 1 bis 4 C-Atomen im Alkylrest, Sulfo, Carboxy, Fluor, Chlor und Brom substituiert sein können.

Weiterhin werden bevorzugt Farbstoffe der Formel (I) verwendet, in der X für den Rest der Formel (IIf)

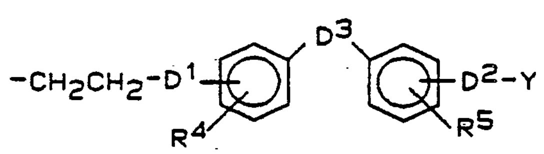

(IIf)

steht,

in der $D^1$ und $D^2$ unabhängig voneinander ein Sauerstoffatom oder eine sekundäre oder tertiäre Aminogruppe, $D^3$ eine direkte Bindung, eine sekundäre oder tertiäre Aminogruppe, geradkettiges oder verzweigtes gesättigtes oder ungesättigtes Alkylen, eine Gruppe der Formel -O-, -S-, -SO-, $-SO_2-$ oder -CO-, $R^4$ und $R^5$

unabhängig voneinander $C_1$-$C_{18}$-Alkyl-, insbesondere $C_1$-$C_4$-Alkyl, $C_1$-$C_{18}$-Alkoxy-, insbesondere $C_1$-$C_4$-Alkoxy, Carboxy, Sulfo oder Halogen und Y Wasserstoff oder den Rest $-CH_2CH_2-SO_2-A$, in der A die bei Formel (I) genannte Bedeutung hat, bedeuten.

Von den Farbstoffen, in denen X den Rest der Formel (IIf) bedeutet, sind besonders solche geeignet, für die $D^1$ und $D^2$ gleiche Bedeutung haben und jeweils eine Gruppe der Formel -O-, -NH- oder -NR-, worin R für $C_1$-$C_4$-Alkyl steht, und $D^3$ eine direkte Bindung oder eine Gruppe der Formel -O-, -S-, -NH-, -NR-, worin R für $C_1$-$C_4$-Alkyl steht, -SO-, $-SO_2-$oder -CO- oder gradkettiges oder verzweigtes $C_1$-$C_8$-Alkylen, wie insbesondere $-CH_2$, $-CH_2CH_2-$, $-(CH_2)_3-$, $-CH(CH_3)-$und $-C(CH_3)_2-$, oder -CH=CH- bedeuten sowie $R^4$ und $R^5$ gleiche Bedeutung haben und $C_1$-$C_4$-Alkyl, $C_1$-$C_4$- Alkoxy, Carboxy, Sulfo oder Chlor sowie Y Wasserstoff oder den Rest $-CH_2CH_2-SO_2-A$, in dem A die bei Formel (I) genannte Bedeutung hat, bedeuten.

Weiterhin sind Farbstoffe der Formel (I) von Interesse, in der X für den Rest der Formel (IIg)

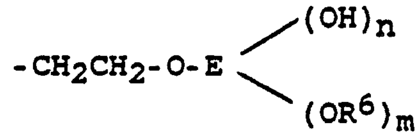

(IIg)

steht, in der E ein weiter nicht substituierter oder ein weiter substituierter geradkettiger, verzweigter oder cyclischer Kohlenwasserstoffrest mit Heteroatomen oder ohne Heteroatome ist, $R^6$ Wasserstoff oder den Rest der Formel $-CH_2CH_2-SO_2-A$, in dem A die bei Formel (I) genannte Bedeutung hat, sowie n und m jeweils ganze Zahlen von 0 bis 12 mit einer Gesamtzahl von 2 bis 12 sind.

Von den Farbstoffen mit dem Rest der Formel (IIg) werden vorzugsweise solche verwendet, in denen X für den Rest der Formel (IIh)

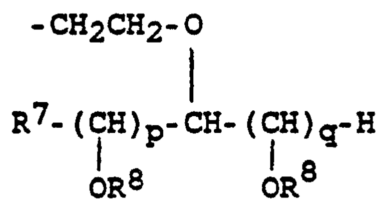

(IIh)

steht, in der $R^7$ Wasserstoff oder Hydroxy, vorzugsweise Wasserstoff, die Reste $R^8$ unabhängig voneinander Wasserstoff oder den Rest der Formel $-CH_2CH_2-SO_2-A$, in der A die bei Formel (I) genannte Bedeutung hat, und p und q jeweils ganze Zahlen von 0 bis 4 mit einer Gesamtzahl von 1 bis 5 sind.

Von den Farbstoffen mit dem Rest der Formel (IIh) werden bevorzugt solche verwendet, bei denen in der Formel (IIh) $R^7$ und $R^8$ Wasserstoff bedeuten.

Die Farbstoffe der Formel (I) können in an sich bekannter Weise analog bekannten Reaktivfarbstoffen der Vinylsulfon-oder $\beta$-Sulfatoethylsulfonreihe hergestellt werden, wobei die Gruppen $-SO_2X$ in der Regel folgendermaßen eingeführt werden: Sulfochlorierung des Farbstoffs oder eines Farbstoffvorprodukts, anschließende Reduktion des aromatischen Sulfochlorids z.B. mit Natriumsulfit zur Sulfinsäure und Umsetzung mit einer geeigneten elektrophilen Alkylverbindung. Im Falle bekannter Reaktivfarbstoffe wird das aromatische Sulfochlorid meist mit Ethylenoxid alkyliert und das entstandene 2-Hydroxyethylsulfon verestert, beispielsweise mit Schwefelsäure, Phosphorsäure oder Salzsäure. Mit Schwefelsäure wird beispielsweise ein $\beta$-Sulfatoethylsulfon-Reaktivfarbstoff direkt oder - falls die Einführung der Reaktivgruppe im Farbstoffvorprodukt erfolgt - nach Aufbau des Farbstoffmoleküls erhalten. Der erhaltene Reaktivfarbstoff kann zur Herstellung von Aufzeichnungsflüssigkeiten verwendet werden. Eine große Zahl von $\beta$-Sulfatoethylsulfonreaktivfarbstoffen, ihre Analoga und Abkömmlinge wie Vinylsulfonreaktivfarbstoffe sind im Handel erhältlich. Geeignete Reaktivfarbstoffe, die als Ausgangsstoffe für Farbstoffe der Formel (I) dienen können sind beispielsweise

C.I. Reactive Yellow 13, 14, 15, 16, 17, 37, 42, 57, 72, 73, 88, 89, 90, 91, 92, 93, 99, 100, 114, 115, 116 und 117, insbesondere 37 und 57,

C.I. Reactive Orange 7, 55, 72 und 74,

C.I. Reactive Red 21, 22, 23, 35, 63, 106, 107, 112, 113, 114, 126, 127, 128, 129, 130, 131, 137, 160, 161, 174 und insbesondere 180,

C.I. Reactive Violet 4, 5 und 25,

C.I. Reactive Blue 19, 20, 21, 117, 118, 119, 143, 144, 147, 148 und 202, inbesondere 21, sowie

C.I. Reactive Black 5, 31 38.

Soweit es die Farbstoffe der Formel (I) betrifft, in denen X ein Rest der Formel (IIa) - (IIh) bedeutet, so können sie bevorzugt aus den genannten Reaktivfarbstoffen hergestellt werden.

Eine Herstellungsmöglichkeit besteht darin, den Farbstoff der Formel (I), in der X eine Vinylgruppe bedeutet, mit Sauerstoff-, Stickstoff- oder Schwefelnukleophilen im Sinne einer Michaeladdition umzusetzen. Eine andere Möglichkeit geht vom Farbstoff der Formel (I) aus, in der X 2-Sulfatoethyl bedeutet, wobei hier die Umsetzung mit Sauerstoff-, Stickstoff- oder Schwefelnukleophilen in der Regel nach Zusatz von geeigneten Basen erfolgt.

Geeignete Nukleophile für die beiden zuletzt genannten Varianten zur Herstellung von Farbstoffen, in denen X einer der Formeln (IIa)-(IIc) entspricht, sind beispielsweise:
$NH_3$ und $H_2O$ sowie Alkohole, Alkylamine, Dialkylamine und Thiole mit einem gesättigten oder ungesättigten Alkylrest mit 1 bis 22 C-Atomen oder ein $C_5$-$C_{10}$-Cycloalkylrest, wie z.B. Methyl, Ethyl, Propyl, Isopropyl, 1-Butyl, 2-Butyl, 2-Methyl-2-propyl, Pentyl, Neopentyl, Hexyl, Heptyl, Octyl, Nonyl, Decyl, Undecyl, Dodecyl, Tetradecyl, Pentadecyl, Hexadecyl, Heptadecyl, Octadecyl, Nonadecyl, Eicosyl, Heneicosyl, Docosyl, Tricosyl, Tetracosyl, 2-Methyl-pentyl, 2-Ethyl-hexyl, 2-Propyl-heptyl, 2-Butyl-octyl, 2-Pentylnonyl, 2-Hexyl-decyl, 2-Heptyl-undecyl, 2-Octyl-dodecyl, 2-Nonyl-tridecyl, 10-Undecenyl, 9c-Octadecenyl, 9t-Octadecenyl, 9c,12c-Octadecadienyl, 9c,12c,15c-Octadecatrienyl, 9c-Eicosenyl, 5,8,11,14-Eicosatetraenyl, 13c-Docosenyl, 13t-Docosenyl, Cyclopentyl, Cyclohexyl, Tetrahydronaphthyl und Decahydronaphthyl, vorzugsweise Alkohole und Amine wie Methanol, Ethanol, Propanol, Isopropanol, Butanol, Isobutanol, Hexanol, Octanol, Decanol, Dodecanol, Tetradecanol, Hexadecanol, Octadecanol, Methylamin, Dimethylamin, Ethylamin, Diethylamin, Propylamin, Butylamin, Hexylamin, Octylamin, Decylamin, Dodecylamin, Tetradecylamin, Hexadecylamin und Octadecylamin.

Geeignete Nukleophile sind auch die obengenannten Alkohole und Amine, die im Alkylrest weiter substituiert sind, wie Glycole, Polyglykole, Glykolmonoalkylether, Hydroxyalkylamine, Alkoxyalkylamine, Alkylendiamine, Alkylaminoalkylamine, Hydroxyalkylsulfonsäuren, Hydroxycarbonsäuren, Hydroxycarbonsäureester, Hydroxycarbonsäureamide, Aminosäuren, -ester und -amide, Arylalkanole und Arylalkylamine, insbesondere Ethylenglykol, Propylenglykol, 2-Methoxyethanol, 2-Methoxypropanol, 2-Ethoxyethanol, 2-Ethoxypropanol, Diethylenglykol, Diethylenglykolmonomethylether, Diethylenglykolmonoethylether, Ethylendiamin, 1,3-Diaminopropan, 1,4-Diaminobutan, 3-Ethylamino-propylamin, Talgfettpropylendiamin, Taurin, Hydroxyethylsulfonsäure, Benzylalkohol, Benzylamin, Phenylethylamin, Tryptamin und Hydrine wie Ethylenchlorhydrin.

Geeignete Nukleophile sind auch gegebenenfalls substituierte aromatische Amine und aliphatische oder aromatische heterocyclische Amine oder entsprechende Thio- oder Hydroxyverbindungen, insbesondere Phenol, Alkylphenole wie Kresole, Hexylphenol, Nonylphenol und Dodecylphenol, Hydroxybenzoesäure, Hydrochinon, Resorcin, Brenzkatechin, Aminobenzol, Toluidin, 1,2- 1,3- und 1,4-Diaminobenzol, 1-Naphthol, 2-Naphthol, Naphtholsulfonsäuren, Sulfanilsäure, Chlorphenol, Dichlorphenole, Naphthylamin, Alkylnaphthole, o-, m- und p-Methoxyphenol und -ethoxyphenol, o-, m- und p-Nitranilin, sowie heterocyclische Amine wie 1-Aminopiperidin, Melamin, 2-Amino-benzthiazol, 5-Aminobenzimidazol-2-on, 2-Mercaptobenzimidazol und 2-Mercaptobenzthiazol.

Geeignete Amine für die Herstellung der Farbstoffe mit dem Rest der Formel (IId) sind Hydrazin und Hydrazine, beispielsweise Monoalkylhydrazine wie Methyl-, Ethyl-, Propyl- und Butylhydrazin, Phenylhydrazin und Dialkylhydrazine wie N,N-Dimethylhydrazin und N,N′-Dimethylhydrazin.

Geeignete Amine für die Herstellung der Farbstoffe mit dem Rest der Formel (IIe) sind beispielsweise Pyrrolidin, Piperidin, Piperazin und Morpholin.

Für die Herstellung der erfindungsgemäßen Farbstoffe mit dem Rest der Formel (IIf) eignen sich beispielsweise Bis-(4-hydroxyphenyl)-methan, 2,2-Bis-(4-hydroxyphenyl)-propan, Bis-(2-hydroxyphenyl)-methan, Bis-(4-hydroxyphenyl)-sulfid, Bis-(4-hydroxyphenyl)-sulfon, 4,4′-Dihydroxybenzophenon, 4,4′-Dihydroxybiphenyl und 2,2′-Dihydroxybiphenyl.

Für die Herstellung der erfindungsgemäßen Farbstoffe mit einem Rest der Formel (IIg) eignen sich beispielsweise Glycerin, Pentaerythrit, Erythrit, Arabit, Adonit, Xylit, Sorbit, Mannit, Dulcit, Monosaccharide wie Glucose und Fructose, Disaccharide wie Saccharose und Maltose, und Trisaccharide wie Raffinose.

Von den bisher genannten Farbstoffen der Formel (I) sind insbesondere solche von Interesse, denen in Form der freien Säure die Formel (Ia) zukommt,

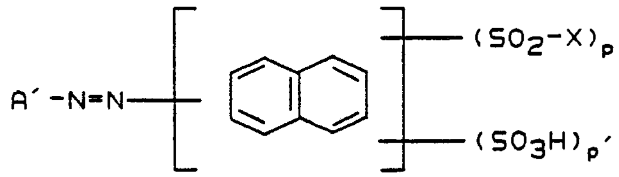

(Ia)

in der $A'$ den Rest einer Azokomponente der Benzol-, Naphthalin-, Acetessigsäurearylamid-, Pyrazolon- oder Chinolin-Reihe darstellt, X die bei Formel (I) genannte Bedeutung hat, $p'$ 1 oder 2, vorzugsweise 1, und $q'$ 1 oder 2 und die Summe ($p'$ + $q'$) höchstens 3 ist.

Besonders bevorzugt sind davon Magenta-Azofarbstoffe, denen in Form der freien Säure die Formel (Ib) zukommt,

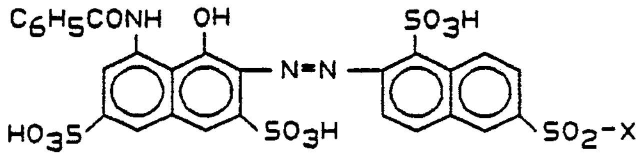

(Ib)

in der X die bei Formel (I) genannte Bedeutung hat.

Speziell die Azofarbstoffe der genannten Formel (Ia) können analog den Reaktivfarbstoffen aus der Deutschen Patentschrift Nr. 19 43 904 hergestellt werden, wobei dabei die Farbstoffe, in denen X einen Rest der Formeln (IIa) bis (IIh) bedeutet, durch Diazotieren geeigneter Naphthylamine der Formel (III) - oder ihrer Salze -

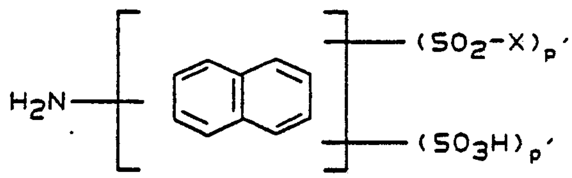

(III)

in der X, $p'$ und $q'$ die bei Formel (Ia) genannte Bedeutung haben, und Kuppeln auf die dort erwähnten Kupplungskomponenten erhalten werden oder aus den dort beschriebenen Vinylsulfon- oder β-Sulfatoethylsulfon-Reaktivfarbstoffen durch Derivatisierung analog den weiter oben beschriebenen Verfahrensweisen durch Umsetzung mit Nukleophilen erhalten werden. Im Falle der Azofarbstoffe der genannten Formel (Ib) können sie in an sich bekannter Weise durch Diazotieren geeigneter aromatischen Naphthylamine der obengenannten Formel (III) und Kupplung auf 1-Benzoylamino-8-naphthol-3,6-disulfonsäure (N-Benzoyl-H-säure) analog den Verfahren aus der deutschen Patentschrift Nr. 19 43 904 hergestellt werden. Bevorzugt werden die Azofarbstoffe der Formel (Ib), in der X einen Rest der Formel (IIa) bis (IIh) bedeutet, aus den entsprechenden Verbindungen, in denen X Vinyl oder 2-Sulfatoethyl bedeutet, analog den weiter oben beschriebenen Verfahrensweisen durch Umsetzung mit Nukleophilen der Formeln $R^1OH$, $HNR^1R^2$, $HSR^1$, $NHR^1NR^2R^3$,

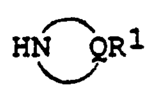

,

$E(OH)_z$ und

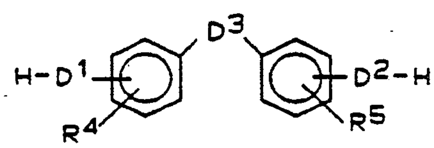

erhalten, wobei in den Formeln $R^1$, $R^2$, $R^3$, $R^4$, $R^5$ und $D^1$, $D^2$ und $D^3$ die obengenannte Bedeutung haben und z eine ganze Zahl von 1 bis 13 ist.

Im Hinblick auf den Mehrfarbendruck mit dem Ink-Jet-Verfahren sind beispielsweise auch Verbindungen bevorzugt zu verwenden, denen in Form der freien Säure die Formeln (Ic) bis (If) zukommen,

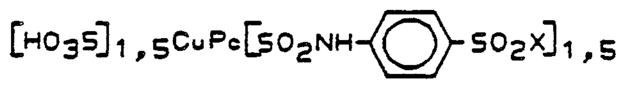

(Ic)

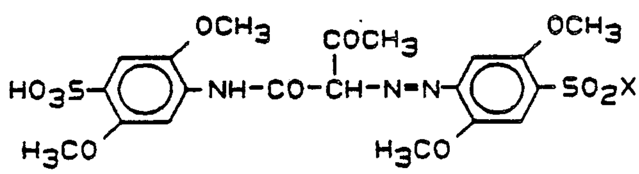

(Id)

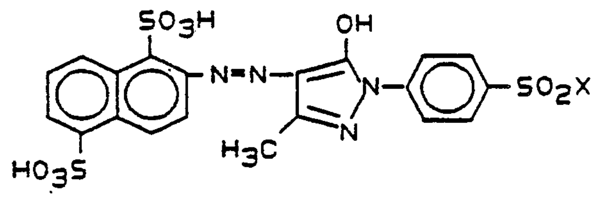

(Ie)

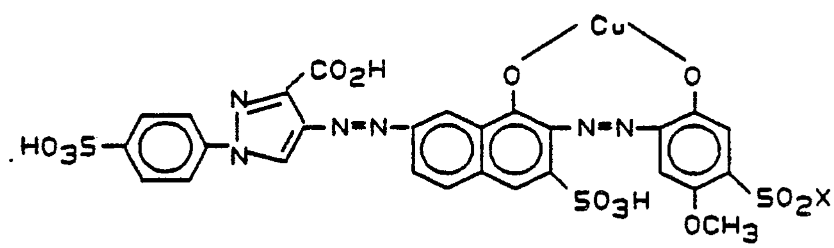

(If)

wobei X die bei Formel (I) genannte Bedeutung hat und CuPc den Rest eines Kupferphthalocyanins bedeutet.

Die Farbstoffe der Formeln (Ic) bis (If) werden bevorzugt analog den bei Formel (Ib) beschriebenen Verfahren aus den entsprechenden Farbstoffen hergestellt, in denen X die 2-Sulfatoethylgruppe bedeutet.

Ein besonderer Vorteil besteht bei der Herstellung erfindungsgemäßer Farbstoffe aus den Farbstoffen der Formel (I), in der X eine Vinyl- oder 2-Sulfatoethyl-Gruppe bedeutet. Die Reaktion mit Sauerstoff-, Stickstoff- oder Schwefelnukleophilen kann dabei nämlich zusammen mit der Herstellung der Aufzeichnungsflüssigkeiten erfolgen. Aufzeichnungsflüssigkeiten und insbesondere Ink-Jet-Tinten werden üblicherweise schwach alkalisch eingestellt und zudem häufig einer teilweise länger anhaltenden Behandlung bei erhöhter Temperatur ausgesetzt sowie anschließend einer Reinigung durch eine geeignete Filtrationsmethode unterzogen, wie es beispielsweise in der DE-A-3 613 009 beschrieben ist.

Unter diesen Bedingungen reagieren die Farbstoffe der Formel (I) glatt mit zahlreichen Alkoholen, Phenolen, Aminen cder Thiolen. Dabei kann der Ablauf der Reaktion durch eine geeignete analytische Methode wie z.B. Dünnschicht- oder Hochdruckflüssigkeits-Chromatographie verfolgt werden. Gegebenenfalls kann zur Beschleunigung der Reaktion die Reaktionstemperatur auf bis zu 150 °C bei Drücken bis zu 6 bar erhöht werden. Bevorzugt werden bei Normaldruck Reaktionstemperaturen zwischen 0 und 100 °C, insbesondere von 20 bis 70 °C, angewendet.

Der pH-Wert der Reaktionslösung kann gleich dem pH-Wert der fertigen Aufzeichnungsflüssigkeit sein und soll zweckmäßig Werte zwischen 6 und 13 annehmen. Bevorzugt sind pH-Werte zwischen 8 und 12 und besonders bevorzugt solche zwischen 9 und 11.

Enthält die herzustellende Tinte ein Gemisch verschiedener Lösungsmittel, so kann die Reaktion in diesem Lösungsmittelgemisch oder bereits vor der Mischung der Lösungsmittelkomponenten in nur einer Komponente des Lösungsmittelgemisches durchgeführt werden.

Die Konzentration der Farbstoffe der allgemeinen Formel (I) kann bei der Umsetzung mit Stickstoff-,

Sauerstoff- oder, Schwefelnukleophilen bereits der gewünschten Farbstoffkonzentration in der Tinte entsprechen oder größer sein, wobei die Obergrenze der Konzentration durch die Löslichkeit der Farbstoffe im Reaktionsmedium begrenzt ist. In der Regel können Farbstoffkonzentrationen von 0,1 % bis 30 % eingesetzt werden. Bevorzugt sind solche von 0,5 bis 20 %, insbesondere von 1 bis 10 %.

Das erfindungsgemäße Verfahren zur Herstellung von Aufzeichnungsflüssigkeiten kann sehr flexibel gestaltet werden und in einfacher Weise an die jeweiligen Erfordernisse, beispielsweise an Apparaturen in Labor und Produktion angepaßt werden.

Es ist daher in einfacher Weise möglich, ausgehend von den Farbstoffen der Formel (I), worin X für $-CH=CH_2$ oder $-CH_2CH_2OSO_3H$ steht, bei der Herstellung der Aufzeichnungsflüssigkeit durch Zusatz geeigneter Alkohole, Phenole, Amine oder Thiole einen oder mehrere Farbstoffe der allgemeinen Formel (I) zu erhalten. Durch entsprechende Auswahl der Alkohole, Phenole, Amine und Thiole oder Mischungen derselben können die Aufzeichnungsflüssigkeiten und insbesondere die darin enthaltenden Farbstoffe in hohem Maße an die individuellen Erfordernisse eines bestimmten Gerätetyps zur Aufzeichnung oder eines bestimmten Aufzeichnungsmaterials angepaßt werden.

Die erfindungsgemäßen Farbstoffe der Formel (I) sind sehr gut wasserlöslich, zeichnen sich jedoch auch durch eine ausgezeichnete Löslichkeit in verschiedenen organischen Lösungsmitteln wie Glykolen, insbesondere Diethylenglykol, Dimethylsulfoxid oder N-Methyl-2-pyrrolidon (NMP) aus. Sie können daher nicht nur in rein wäßrigen Aufzeichnungsflüssigkeiten, sondern auch in solchen, die mit Wasser mischbare organische Lösungsmittel enthalten, sowie in wasserfreien Aufzeichnungsflüssigkeiten eingesetzt werden.

In Tintenstrahl-Aufzeichnungsflüssigkeiten werden in der Regel flüssige Medien verwendet, die überwiegend aus Wasser bestehen. Im allgemeinen werden wenig flüchtige wasserlösliche organische Lösungsmittel, wie Glykol zusätzlich als Feuchthaltemittel verwendet. Die Löslichkeit von Farbstoffen in diesen flüssigen Medien verändert sich in empfindlicher Weise mit der chemischen Struktur der Farbstoffe, wobei die Löslichkeiten der Farbstoffe in Wasser einerseits und in Glykol andererseits häufig gegenläufig sind. An der Düsenspitze besteht die Tendenz, daß das Wasser als leichter flüchtige Komponente bevorzugt verdampft und eine hohe Glykolkonzentration entsteht. Enthält die Aufzeichnungsflüssigkeit einen in Glykol wenig löslichen Farbstoff, so besteht die Gefahr einer Verstopfung der Düse durch Ausfällung des Farbstoffs. So sind viele der anfangs genannten Säurefarbstoffe beispielsweise in Wasser gut löslich, besitzen jedoch eine geringere Löslichkeit in Glykol. Daher kommt es bei Aufzeichnungsflüssigkeiten mit einem Gehalt an solchen Säurefarbstoffen häufig zu Verstopfungen der Düsen. Demgegenüber weisen die erfindungsgemäß zu verwendenden Farbstoffe der Formel (I) eine gute Löslichkeit in Glykol und anderen organischen Lösungsmitteln auf, wobei die Löslichkeit in Wasser in einem für praktische Zwecke geeigneten Bereich liegt. Verstopfungen der Tintenstrahldüsen werden daher weitgehend verhindert.

Der Anteil der erfindungsgemäß zu verwendenden Farbstoffe in den Aufzeichnungsflüssigkeiten wird je nach der Art der Bestandteile des flüssigen Mediums, den verlangten Eigenschaften der Aufzeichnungsflüssigkeit und dergleichen festgelegt. Zweckmäßig beträgt dieser Anteil 0,1-20, vorzugsweise 0,5-15 und insbesondere 1-10 Gew.-% Farbstoff, bezogen auf das Gesamtgewicht der Aufzeichnungsflüssigkeit.

Die erfindungsgemäßen Farbstoffe können allein oder als Kombination aus zwei oder mehreren derartigen Farbstoffen eingesetzt werden. Auch können die Farbstoffe zusammen mit einem oder mehreren anderen Farbstoffen, wie Direktfarbstoffen, Säurefarbstoffen, Reaktivfarbstoffen und dergleichen, eingesetzt werden.

Vorzugsweise besteht der Feststoffanteil in der Aufzeichnungsflüssigkeit aus 50 bis 100 Gew.-%, insbesondere 90 bis 100 Gew.-% Farbstoff der Formel (I).

Die Farbstoffe der allgemeinen Formel (I) können in Pulver-oder Granulatform, als Preßkuchen oder als Lösung zur Herstellung von Aufzeichnungsflüssigkeiten eingesetzt werden. Vorzugsweise werden die Farbstoffe der Formel (I) in salzarmer Form eingesetzt, wie sie beispielsweise durch Ausfrieren von Natriumsulfat aus einer wäßrigen salzhaltigen Lösung der Farbstoffe nach dem Verfahren der EP-A-0 158 233 erhältlich ist.

Besonders bevorzugt ist eine Form, die weniger als 2 Gew.-% Sulfationen und weniger als 0,5 Gew.-% Chloridionen enthält und die beispielsweise durch Lösungs-Fällungs-Operationen, Ionenaustausch oder durch Membrantrennverfahren (siehe DE-A-35 39 727) erhalten werden kann.

Auszeichnungsflüssigkeiten, die einen oder mehrere der Farbstoffe der allgemeinen Formel (I) enthalten, eignen sich hervorragend für Druck-, Vervielfältigungs-, Markierungs-, Schreib-, Zeichen-, Stempel- oder Registrierverfahren. Besonders vorteilhaft sind die Aufzeichnungsflüssigkeiten mit den genannten Farbstoffen in solchen Vorrichtungen zu verwenden, die nach einem Ink-Jet-Verfahren arbeiten. Die erfindungsgemäßen Tinten für den Tintenstrahldruck zeichnen sich durch eine geringe Neigung zur Verstopfung der Düsen aus. Bei der Lagerung der erfindungsgemäßen Tinten tritt keine oder nur geringe Abscheidung von Niederschlägen auf. Auch wenn die Tinten längere Zeit unter ständiger Rezirkulation oder

intermittierend unter zwischenzeitigem Abschalten des Tintenstrahldruckers angewandt werden, ist allenfalls nur eine geringfügige Änderung der physikalischen Eigenschaften der erfindungsgemäßen Tinten festzustellen. Unter Verwendung der erfindungsgemäßen Tinten werden gedruckte Bilder von hoher Qualität erhalten, die ausgezeichnete Farbwiedergabe, hohe Brillanz und hervorragende Wasser- und Lichtbeständigkeit besitzen.

Wäßrige Tinten, die unter Verwendung der Farbstoffe der Formel (I) hergestellt wurden, besitzen eine reine und brillante Nuance und zeichnen sich durch ausgezeichnete Farbwiedergabe und Lichtechtheit aus. Ihre Lichtechtheit übertrifft bei weitem die von Tinten mit Säurefarbstoffen ähnlicher Nuance, wie beispielsweise C.I. Acid Red 52 im Falle der Magentafarbmittel.

Gegenüber wäßrigen Tinten mit Säurefarbstoffen zeichnen sich die erfindungsgemäßen Tinten mit Farbstoffen der Formel (I), in der X eine Vinyl- oder 2-Sulfatoethylgruppe bedeutet, durch eine deutlich höhere Wasserbeständigkeit auf Papier aus.

Nachstehend wird die Erfindung anhand von Beispielen näher erläutert. Die angegebenen Teile bedeuten Gewichtsteile.

## Herstellung von Farbstoffen und Tinten

1) 94 Teile eines salzhaltigen Farbstoffs der Formel (Ib), worin X für $-CH_2CH_2-O-SO_3H$ steht, mit einem Farbstoffgehalt von 45 % werden in 250 Teilen Wasser gelöst. Diese Lösung läßt man bei Raumtemperatur unter Rühren zu 60 Teilen einer zweimolaren Sodalösung zutropfen, wobei der pH-Wert der Mischung gegebenenfalls durch Zugabe weitere Sodalösung bei pH 9 gehalten wird. Anschließend wird der entstandene Farbstoff, in dem X eine Vinylgruppe bedeutet, mit 200 Teilen Natriumchlorid ausgesalzen, abgesaugt und mit gesättigter Kochsalzlösung gewaschen. Nach dem Trocknen erhält man 43 Teile Pulver mit einem Farbstoffgehalt von 73%.

2) 94 Teile eines salzhaltigen Farbstoffs der Formel (Ib), worin X für $-CH_2CH_2-O-SO_3H$ steht, mit einem Farbstoffgehalt von 45 % werden in 250 Teilen Wasser gelöst. Diese Lösung läßt man bei Raumtemperatur unter intensivem Rühren zu einer Mischung aus 100 Teilen Wasser und 5 Teilen Anilin zutropfen, wobei der pH-Wert mit einer zweimolaren Sodalösung bei pH 9 gehalten wird. Nach dem Aussalzen mit 170 Teilen Natriumchlorid wird abgesaugt und mit gesättigter Kochsalzlösung gewaschen. Man erhält nach dem Trocknen 53 Teile eines salzhaltigen Farbstoffpulvers mit einem Farbstoffgehalt von 78 %.
In Form der freien Säure hat der erhaltene Farbstoff die Formel (Ib), in der X den Rest 2-(Phenylamino)-ethyl bedeutet. Als Ergebnis der Reaktion ist daher die nucleophile Aminogruppe des Anilins an die Stelle der Sulfatogruppe der 2-Sulfatoethylgruppe getreten.

3) Unter Verwendung von Nukleophilen der Formel Nuc-H anstelle von Anilin werden analog zu Beispiel 2) Farbstoffe der Formel (Ib) erhalten, in denen X die in der folgenden Tabelle 1 aufgeführten substituierten Ethylreste der Formel $Nuc-CH_2-CH_2-$ bedeutet.

**Tabelle 1**

| Beispiel | X |
|---|---|
| 3a | $CH_3CH_2CH_2CH_2NHCH_2CH_2$- |
| 3b | $HO_3SCH_2CH_2NHCH_2CH_2$- |
| 3c | $CH_3(CH_2)_{15}NHCH_2CH_2$- |
| 3d | $CH_3(CH_2)_{15}NHCH_2CH_2CH_2NHCH_2CH_2$- |
| 3e | 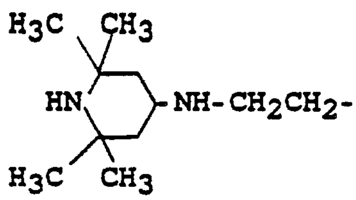 |
| 3f | 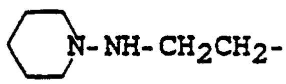 |
| 3g | 2-(Benzthiazol-2-ylamino)-ethyl |
| 3h | 2-(2-Oxo-benzimidazol-5-ylamino)-ethyl |
| 3i | $H_2NCH_2CH_2$- |
| 3j | $H_2NCH_2CH_2NHCH_2CH_2$- |
| 3k | $H_2NCH_2CH_2CH_2NHCH_2CH_2$- |
| 3l | $H_2NCH_2CH_2CH_2CH_2NHCH_2CH_2$- |
| 3m | $H_2NNHCH_2CH_2$- |
| 3n | $HOCH_2CH_2NHCH_2CH_2$- |
| 3o | $(HOCH_2CH_2)_2NCH_2CH_2$- |
| 3p | R-NH-$CH_2CH_2CH_2$-NH-$CH_2CH_2$- mit R= Fettalkyl (65 % $C_{18}$, 30 % $C_{16}$ und 5 % $C_{14}$) |

4) 94 Teile eines salzhaltigen Farbstoffs der Formel (Ib), worin X für -$CH_2CH_2$-$OSO_3H$ steht, mit einem Farbstoffgehalt von 45 % werden in 300 Teilen Wasser gelöst. Man gibt 4 Teile Ethylenglykolmonomethylether zu und stellt mit 2-normaler Natronlauge einen pH-Wert von 11 ein. Bei diesem pH-Wert wird 12 Stunden bei Raumtemperatur gerührt. Nach dem Aussalzen mit 250 Teilen Natriumchlorid wird der entstandene Farbstoff abgesaugt, mit gesättigter Kochsalzlösung gewaschen und bei 80 °C im Vakuum getrocknet. Man erhält 55 Teile salzhaltigen Farbstoffs mit einem Farbstoffgehalt von 63 %. Die Struktur des Farbstoffs entspricht der Formel (Ib), in der X die Formel

$CH_3OCH_2CH_2OCH_2CH_2$-
bedeutet.

5) In analoger Weise zu Beispiel 4 werden unter Verwendung von anderen Sauerstoffnukleophilen anstelle des Ethylenglykolmonomethylethers Farbstoffe der Formel (Ib) erhalten, in der X die in der folgenden Tabelle 2 aufgeführten Reste bedeutet.

**Tabelle 2**

| Beispiel | X |
|---|---|
| 5a | 2-Ethoxyethyl |
| 5b | 2-Propoxyethyl |
| 5c | 2-(2-Butoxyethoxy)-ethyl |
| 5d | 2-Phenoxyethyl |
| 5e | 2-Naphthoxyethyl |
| 5f | 2-Benzoxyethyl |
| 5g | 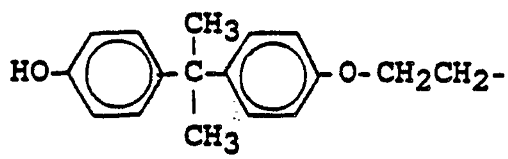 |
| 5h | 2-(4-Hydroxyphenoxy)-ethyl |
| 5i | 2-(3-Hydroxyphenoxy)-ethyl |
| 5j | 2-(2-Hydroxyethoxy)-ethyl |
| 5k | 2-(3-Hydroxypropoxy)-ethyl |
| 5l | 2-(2,3-Dihydroxypropoxy)-ethyl |
| 5m | $HOCH_2(CHOH)_4CH_2OCH_2CH_2$- |

6) 4,5 Teile Farbstoff der Formel (Ib), in der X für Vinyl steht, werden zusammen mit 0,2 Teilen Kaliumkarbonat und 3,0 Teilen 2-Aminoethanol in 500 Teilen Ethylenglykol und 42,8 Teilen Wasser gelöst. Die Tinte besitzt einen pH-Wert von 10,8. Nach 4 Stunden bei Raumtemperatur ist dünnschichtchromatographisch praktisch nur ein Produkt nachweisbar, das nach der Struktur dem Produkt aus Beispiel 3n entspricht.

7) 4,5 Teile Farbstoff der Formel (Ib), in der X für $-CH_2CH_2OSO_3H$ steht, werden zusammen mit 0,2 Teilen Lithiumhydroxid und 3,0 Teilen Taurin in 50 Teilen Propylendiglykol und 42,3 Teilen Wasser gelöst. Nach kurzer Zeit zeigt die dünnschichtchromatographische Analyse dieser Aufzeichnungsflüssigkeit ausschließlich das Produkt aus Beispiel 3b an.

8) 4,0 Teile Farbstoff der Formel (Ib), in der X für Vinyl steht, werden zusammen mit 3,0 Teilen 5-Aminobenzimidazol-2-on in 20 Teilen Propylenglykol, 5 Teilen Dimethylformamid und 68 Teilen Wasser gelöst. Die Tinte besitzt einen pH-Wert von 6,6. Nach 48 Stunden bei Raumtemperatur ist der Ausgangsfarbstoff laut dünnschichtchromatographischer Analyse umgesetzt. Die Tinte enthält nun eine Mischung der Farbstoffe der Formel (Ib), in der X zum Teil $-CH_2CH_2OH$ und zum Teil 2-[5-(2-oxo-benzimidazolyl)amino]-ethyl bedeutet.

9) Bestimmung der Wasserbeständigkeit:
Aus 4 Teilen des in der folgenden Tabelle 3 angegebenen Farbstoffs und 96 Teilen Wasser wird jeweils eine Tinte hergestellt und mit einem Blatt Papier (Blatt Nr. 2312 von Schleicher und Schüll) eine Tauchfärbung durchgeführt.

Man läßt einen Tag bei Raumtemperatur trocknen und bestimmt hierauf die Farbstärke $F_o$ der auf dem Papier aufgezogenen Tinte mit einem Spektralphotometer der Firma Pacific Scientific. Die Probe wird dann in zwei Teile geschnitten, die getrennt in Wasser von 23° C getaucht werden. Eine Hälfte wird nach 15 Sekunden und die andere nach 30 Sekunden aus dem Bad genommen. Nach dem Abtrocknen wird die verbliebene Farbstärke $F_{15}$ bzw. $F_{30}$ gemessen.

Als Maß für die Wasserbeständigkeit W wird das Verhältnis der Farbstärken $F_{15}$ oder $F_{30}$ zur Farbstärke $F_o$ in Prozent verwendet.

Die Ergebnisse sind in Tabelle 3 zusammengefaßt, die zum Vergleich auch die Ergebnisse zur Wasserbeständigkeit eines handelsüblichen Säurefarbstoffs und eines Reaktivfarbstoffs enthält.

Tabelle 3

| Farbstoff | $W_{15}$ | $W_{30}$ |
|---|---|---|
| 3 l | 80 % | 71 % |
| 3 p | 78 % | 71 % |
| 3 g | 70 % | 69 % |
| Formel (Ib) mit X = 2-Sulfatoethyl | 66 % | 58 % |
| C.I. Acid Red 52 | 38 % | 30 % |

Der Tabelle ist zu entnehmen, daß die erfindungsgemäß zu verwendenden Farbstoffe eine deutlich verbesserte Wasserbeständigkeit im Vergleich zu dem Säurefarbstoff und dem Reaktivfarbstoff besitzen. Ähnlich gute Wasserbeständigkeiten werden auch mit den übrigen Verbindungen aus den Beispielen 1 bis 8 erreicht.

10) Für Druckversuche nach dem Tintenstrahlverfahren werden drei Aufzeichnungsflüssigkeiten aus folgenden Bestandteilen hergestellt:
20 Teile Diethylenglykol
79 Teile entionisiertes Wasser
1 Teil ®Luviskol K 30 (Polyvinylpyrrolidon)
4 Teile des Farbstoffs aus Beispiel 3c, 3o oder 4, wobei der Farbstoff jeweils durch Membranfiltration entsalzt wurde (Chloridionengehalt < 0,1 %, Sulfationengehalt < 2 %)

Die jeweils erhaltene Tinte wird über ein 0,4 µm Membranfilter der Firma Sartorius abfiltriert und in einem XEROX Drucker 4020 eingesetzt, der nach dem Drop-on-Demand-Verfahren arbeitet. Der Ausdruck erfolgt auf Original Xerox Papier.
Die eingesetzten Aufzeichnungsflüssigkeiten zeigen sowohl bei kontinuierlicher als auch intermittierender 96-stündiger Aufzeichnung bei Umgebungstemperaturen von 15 bis 30 °C eine gute Abgabestabilität.
Bei der Untersuchung zur Langzeitlagerstabilität mit einjähriger Lagerung bei einer mittleren Raumtemperatur von 21 °C ergeben sich keine Ausfällungen oder Farbänderungen des Aufzeichnungsmittels.
Die erhaltenen Andrucke weisen ein brillantes Magenta auf und lassen sich hervorragend als Primärfarben für die subtraktive Farbmischung verwenden. Sie erweisen sich außerdem als so lichtecht, daß sie nach 100-stündiger Belichtung mit einen Xenon-Fadeometer noch gut lesbar sind. Die Wasserbeständigkeit der Drucke ist ausgezeichnet.

11) 1250 Teile einer 33 prozentigen wäßrigen Lösung des Farbstoffs mit der Formel

$[NaO_3S]_{1,5}CuPc[SO_2NH\text{-}p\text{-}C_6H_4SO_2CH_2CH_2OSO_3Na]_{1,5}$

werden mit konzentrierter Natronlauge auf einen pH-Wert von 12 gebracht. Nach einer Stunde wird mit 1250 Teilen Wasser verdünnt und mit 2 N Salzsäure pH 2 eingestellt. Dabei fällt der Farbstoff der Formel

$\{NaO_3S]_{1,5}CuPc[SO_2NH\text{-}p\text{-}C_6H_4SO_2CH=CH_2]_{1,5}$

aus. Er wird abgesaugt und mit gesättigter Kochsalzlösung gewaschen. Nach dem Trocknen erhält man 310 Teile Farbstoff mit einem Sulfatgehalt von 0,05 %. Der Chloridionengehalt kann durch Elektrodialyse der wäßrigen Lösung bei pH 6 auf den gleichen Wert reduziert werden.

12) 107 Teile des Farbstoffs der Formel

$[NaO_3S]_{1,5}CuPc[SO_2NH\text{-}p\text{-}C_6H_4SO_2CH_2CH_2OSO_3Na]_{1,5}$

werden in wäßriger Lösung mit 30 Teilen Cocosfettamin gerührt, bis chromatographisch kein freis Amin mehr in der Reaktionsmischung nachweisbar ist. Danach wird der Farbstoff ausgesalzen und abgesaugt. Nach dem Waschen mit gesättigter Kochsalzlösung wird bei 80 °C getrocknet. Man erhält 86 Teile eines Farbstoffs, dem in Form der freien Säure die Formel

$[NaO_3S]_{1,5}CuPc[SO_2NH\text{-}p\text{-}C_6H_4SO_2CH_2CH_2NH(CH_2)_nCH_3]_{1,5}$,

zukommt, in der n 8 bis 18 bedeutet (entsprechend dem in Cocosfettamin enthaltenen Gemisch von Fettaminen).

13) Man verfährt wie in Beispiel 10 beschrieben, jedoch mit dem Unterschied, daß man 4 Teile des Farbstoffs aus Beispiel 11 oder 12 verwendet. Man erhält Andrucke mit hoher Brillanz und ausgezeichneter

Lichtechtheit, die hervorragend den Farbton Cyan im Mehrfarbendruck wiedergeben.

14) 86 Teile eines Farbstoffs, dem in Form der freien Säure die Formel (Id) entspricht, in der X für den Rest der Formel

$-CH_2CH_2OSO_3H$

steht, werden in 400 ml Wasser gelöst. Anschließend wird mit konzentrierter Natronlauge ein pH-Wert von 12 eingestellt. Nach 30 Minuten wird neutralisiert und der Farbstoff in üblicher Weise isoliert. Man erhält 52 Teile eines gelben Farbstoffs, dem in Form der freien Säure die Formel (Id) zukommt, in der X für den Rest der Formel $-CH=CH_2$ steht.

15) 86 Teile eines 40 %igen Farbstoffs, dem in Form der freien Säure die weiter oben definierte Formel (Ie) entspricht, in der X für $CH_2CH_2OSO_3H$ steht, mit einem Farbstoffgehalt von 40 % wird in 350 Teilen Wasser gelöst. Der pH-Wert der Lösung wird mit Natronlauge auf 12 eingestellt. Anschließend werden 13,5 Teile Talgfettamin (®Genamin TA 100 D) gelöst in 50 Teilen Eisessig zugegeben, wobei der pH-Wert mit Natronlauge bei 9,5 gehalten wird. Danach wird 30 Minuten bei 60° C gerührt, abgesaugt und mit Kochsalzlösung und Wasser gewaschen. Man erhält 41 Teile eines 84 %igen gelben Farbstoffs, dem in Form der freien Säure die Formel (Ie) zukommt, in der X für

$-CH_2CH_2NH(CH_2)_nCH_3$

steht und n 14 bis 18 bedeutet.

Dieser Farbstoff eignet sich besonders für nicht-wäßrige Aufzeichnungsflüssigkeiten.

16) In analoger Weise zu Beispiel 15 werden unter Verwendung von anderen Nukleophilen (siehe nachfolgende Tabelle 4) anstelle des Talgfettamins Farbstoffe erhalten, denen in Form der freien Säure die Formel (Id) zukommt, wobei X jeweils die in der Tabelle 4 angegebene Bedeutung hat:

**Tabelle 4**

| Beispiel | Nukleophil | X |
|---|---|---|
| 16a | Dimethylamin | $(CH_3)_2N-CH_2-CH_2-$ |
| 16b | n-Butylamin | $CH_3CH_2CH_2CH_2NHCH_2CH_2-$ |
| 16c | Ethylendiamin | $NH_2CH_2CH_2NHCH_2CH_2-$ |
| 16d | Ethanol | $CH_3CH_2OCH_2CH_2-$ |
| 16e | Benzylalkohol | 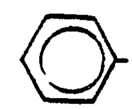 $CH_2OCH_2CH_2-$ |
| 16f | 2-Aminoethansulfonsäure | $HO_3SCH_2CH_2NH-CH_2CH_2-$ |
| 16g | 2-Mercaptobenzthiazol | 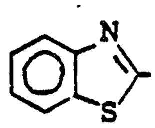 $S-CH_2-CH_2-$ |

17) 133 Teile eines Farbstoffs dem in Form der freien Säure die weiter oben definierte Formel (If) zukommt, wobei X für den Rest $-CH_2CH_2OSO_3H$ steht, und der einen Farbstoffgehalt von 31 % besitzt, werden in 300 Teilen Wasser gelöst. Anschließend wird 2 Stunden bei pH 11,5 gerührt. Zur Isolierung des Produktes wird auf pH 4 gestellt und mit 350 g Kochsalz in kleinen Portionen versetzt. Man läßt noch 3 Stunden nachrühren, saugt ab und wäscht mit gesättigter Kochsalzlösung. Nach dem Trocknen erhält man 83 Teile des Farbstoffs mit obiger Formel, wobei X für den Rest $-CH=CH_2$ steht, mit einem Gehalt von 44 %.

18) 133 Teile des Farbstoffs mit der Formel (If), in der X für $-CH_2CH_2OSO_3H$ steht, werden in 350 Teilen Wasser gelöst. Man stellt mit Natronlauge auf pH 11,5 und versetzt tropfenweise mit einer Mischung aus 50 ml Eisessig und 9,5 Teilen Dodecylamin, wobei der pH-Wert mit Natronlauge etwa konstant gehalten wird. Man läßt 12 Stunden bei Raumtemperatur rühren, neutralisiert mit 2 N Salzsäure und versetzt mit 200 Teilen Kochsalz. Man erhält 92 Teile eines schwarzen Farbstoffs mit einem Farbstoffgehalt von 37 %, dem in Form der freien Säure die Formel (If) zukommt, in der X für $-CH_2CH_2-NH(CH_2)_{11}CH_3$ steht.

19) In analoger Weise zu Beispiel 18 werden unter Verwendung von anderen Nukleophilen (siehe Tabelle 5) anstelle des Dodecylamins Farbstoffe erhalten, bei denen X die nachfolgende Bedeutung (siehe Tabelle) hat.

**Tabelle 5**

| Beispiel | Nukleophil | X |
|---|---|---|
| 19a | Pentylamin | $CH_3(CH_2)_5NH-CH_2CH_2-$ |
| 19b | $C_{18}$-$C_{22}$-Fettamin | $CH_3(CH_2)_{18-22}NH-CH_2CH_2-$ |
| 19c | 2-Aminoethansulfonsäure | $HO_3SCH_2CH_2NH-CH_2CH_2-$ |
| 19d | Propanol | $CH_3CH_2CH_2O-CH_2CH_2-$ |
| 19e | Methanol | $CH_3-O-CH_2CH_2-$ |
| 19f | Ethylendiamin | $H_2NCH_2CH_2-NH-CH_2CH_2-$ |
| 19g | Anilin | 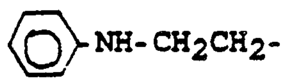 |
| 19h | 2-Mercaptobenzimidazol | 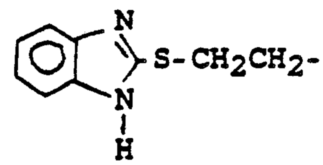 |
| 19i | 2-Mercaptobenzthiazol | 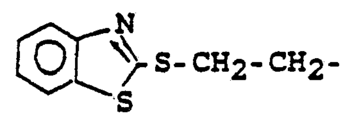 |

20) Man verfährt analog Beispiel 10, jedoch mit dem Unterschied, daß man 4 Teile des Farbstoffs des Beispiels 18 oder 19b verwendet. Man erhält farbstarke schwarze Andrucke mit hervorragender Lichtechtheit und ausgezeichneter Wasserbeständigkeit.

**Ansprüche**

1. Verwendung von wasserlöslichen Farbstoffen zum Färben von Aufzeichnungsflüssigkeiten, dadurch gekennzeichnet, daß den Farbstoffen in Form der freien Säure die allgemeine Formel (I) zukommt,

$A-(SO_2-X)_p$ (I)

worin A für einen üblichen farbgebenden und mindestens eine Sulfonsäuregruppe tragenden Rest aus der Klasse der Mono-oder Disazofarbstoffe oder deren Komplexe mit Chrom, Eisen, Kobalt oder Kupfer, der Kupfer- oder Nickelphthalocyanine, Anthrachinone, Dioxazine oder Kupfer-Formazan-Komplexe steht, p 1, 2, 3 oder 4 ist und X für eine Vinylgruppe oder für einen Rest der Formeln (IIa) bis (IIe)

$-CH_2CH_2OR^1$ (IIa)
$-CH_2CH_2NR^1R^2$ (IIb)
$-CH_2CH_2SR^1$ (IIc)
$-CH_2CH_2NR^1NR^2R^3$ (IId) und

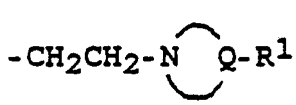 (IIe)

steht, in denen

$R^1$, $R^2$ und $R^3$ unabhängig voneinander ein Wasserstoffatom, den Rest der Formel $-CH_2CH_2-SO_2-A$, in der A wie vorstehend definiert ist, oder einen gegebenenfalls substituierten Alkyl-, Cycloalkyl-, Aralkyl- oder Arylrest oder einen gegebenenfalls substituierten Rest eines aliphatischen oder aromatischen heterocyclischen Systems und Q zusammen mit dem Stickstoffatom ein gegebenenfalls substituiertes aliphatisches oder aromatisches heterocyclisches System bedeuten, wobei die Reste $R^1$, $R^2$ und $R^3$ und der Heterocyclus aus N und Q insbesondere weiter unsubstituiert sind oder durch einen oder mehrere Reste aus der Gruppe Alkyl, Alkoxy, Aryl, Hydroxy, primäres, sekundäres und tertiäres Amino, Nitro, Sulfo, Carboxy, Alkyloxycarbonyl, Aminocarbonyl, Alkylaminocarbonyl, Alkanoylamino und Halogen substituiert sind,

oder daß X für einen Rest der Formel (IIf)

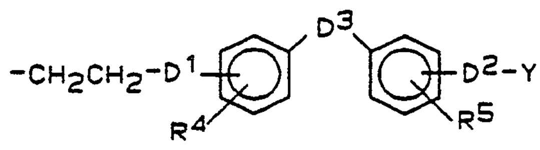

(IIf)

steht, in der

$D^1$ und $D^2$ unabhängig voneinander ein Sauerstoffatom oder eine sekundäre oder tertiäre Aminogruppe, $D^3$ eine direkte Bindung, eine sekundäre oder tertiäre Aminogruppe, gesättigtes oder ungesättigtes Alkylen, eine Gruppe der Formel -O-, -S-, -SO-, $-SO_2-$ oder -CO-, $R^4$ und $R^5$ unabhängig voneinander eine $C_1$-$C_{18}$-Alkyl-, $C_1$-$C_{18}$-Alkoxy-, Carboxy oder Sulfogruppe oder ein Halogenatom und Y Wasserstoff oder den Rest $-CH_2CH_2-SO_2-A$, in der A wie in Anspruch 1 definiert ist, bedeuten, oder daß X für den Rest der Formel (IIg) steht,

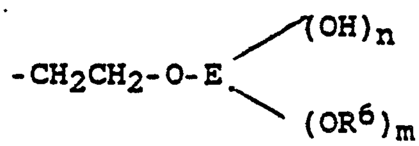

(IIg)

in der

E ein weiter nicht substituierter oder ein weiter substituierter geradkettiger, verzweigter oder cyclischer Kohlenwasserstoffrest mit Heteroatomen oder ohne Heteroatome,

$R^6$ Wasserstoff oder ein Rest der Formel $-CH_2CH_2-SO_2-A$, in dem A wie oben definiert ist, sowie n und m jeweils ganze Zahlen von 0 bis 12 mit einer Gesamtzahl von 2 bis 12 sind.

2. Verwendung nach Anspruch 1, dadurch gekennzeichnet, daß dem Farbstoff der Formel (I) in Form der freien Säure die Formel (Ia) zukommt,

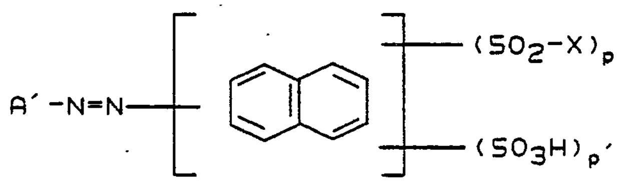

(Ia)

in der A′ den Rest einer Azokomponente der Benzol-, Naphthalin-, Acetessigsäurearylamid-, Pyrazolon- oder Chinolin-Reihe darstellt, X die genannte Bedeutung hat, p′ und q′ jeweils 1 oder 2 und die Summe (p′ + q′) höchstens 3 ist.

3. Verwendung nach Anspruch 2, dadurch gekennzeichnet, daß dem Farbstoff die Formel (Ib) zukommt,

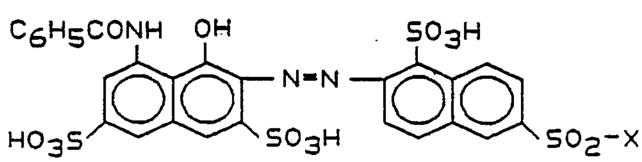

(Ib)

in der X die genannte Bedeutung hat.

4. Verwendung nach Anspruch 1, dadurch gekennzeichnet, daß dem Farbstoff der Formel (I) in Form der freien Säure eine der Formel (Ic) bis (If) zukommt

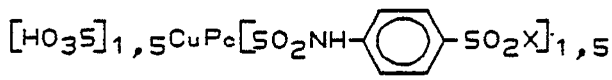

(Ic)

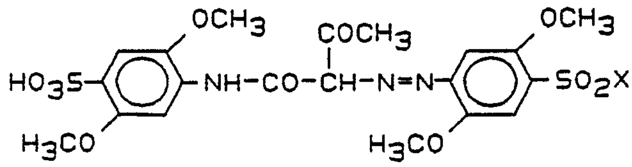

(Id) .

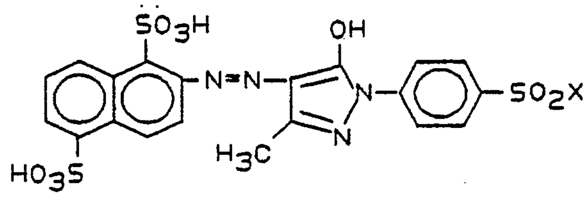

(Ie)

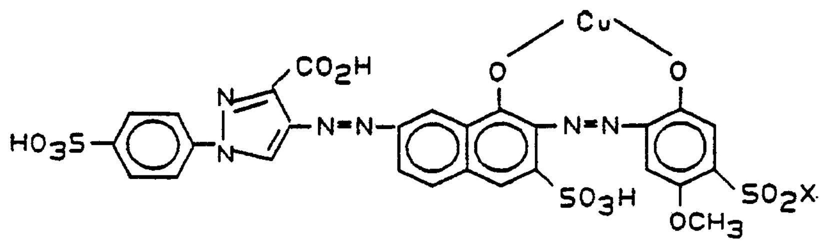

(If)

wobei X die bei Formel (I) genannte Bedeutung hat.

5. Verwendung nach einem oder mehreren der Ansprüche 1 bis 4, zum Färben von Aufzeichnungsflüssigkeiten für Druck-, Vervielfältigungs-, Markierungs-, Schreib-, Zeichen-, Stempel- oder Registrierverfahren.

6. Verwendung nach Anspruch 5 zur Herstellung einer Tinte für das Ink-Jet-Verfahren.

7. Verwendung nach Anspruch 3 zur Herstellung von Magenta-Tinten für das Ink-Jet-Verfahren.

8. Wasserlösliche Azofarbstoffe der Formel (Ib) nach Anspruch 3 oder der Formeln (Ic) bis (If) nach Anspruch 4 in denen jeweils X für einen Rest der Formeln

$-CH_2CH_2OR^1$ (IIa)
$-CH_2CH_2NR^1R^2$ (IIb)
$-CH_2CH_2SR^1$ (IIc)
$-CH_2CH_2NR^1NR^2R^3$ (IId) und

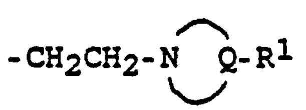

(IIe)

steht, in denen

$R^1$, $R^2$ und $R^3$ unabhängig voneinander ein Wasserstoffatom, den Rest der Formel $-CH_2CH_2-SO_2-A$, in der A wie in Anspruch 1 definiert ist, oder einen gegebenenfalls substituierten Alkyl-, Cycloalkyl-, Aralkyl- oder Arylrest oder einen gegebenenfalls substituierten Rest eines aliphatischen oder aromatischen heterocyclischen Systems und Q zusammen mit dem Stickstoffatom ein gegebenenfalls substituiertes aliphatisches oder aromatisches heterocyclisches System bedeuten, wobei die Reste $R^1$, $R^2$ und $R^3$ und der Heterocyclus

aus N und Q insbesondere weiter unsubstituiert sind oder durch einen oder mehrere Reste aus der Gruppe Alkyl, Alkoxy, Aryl, Hydroxy, primäres, sekundäres und tertiäres Amino, Nitro, Sulfo, Carboxy, Alkyloxycarbonyl, Aminocarbonyl, Alkylaminocarbonyl, Alkanoylamino und Halogen substituiert sind,
oder daß X für einen Rest der Formel (IIf)

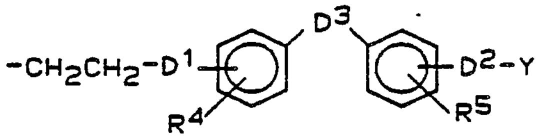

(IIf)

steht, in der
$D^1$ und $D^2$ unabhängig voneinander ein Sauerstoffatom oder eine sekundäre oder tertiäre Aminogruppe, $D^3$ eine direkte Bindung, eine sekundäre oder tertiäre Aminogruppe, gesättigtes oder ungesättigtes Alkylen, eine Gruppe der Formel -O-, -S-, -SO-, $-SO_2-$ oder -CO-, $R^4$ und $R^5$ unabhängig voneinander eine $C_1$-$C_{18}$-Alkyl-, $C_1$-$C_{18}$-Alkoxy-, Carboxy- oder Sulfogruppe oder ein Halogenatom und Y Wasserstoff oder den Rest $-CH_2CH_2-SO_2-A$, in der A wie in Anspruch 1 definiert ist, bedeuten, oder daß X für den Rest der Formel (IIg) steht,

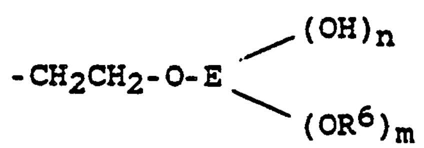

(IIg)

in der
E ein weiter nicht substituierter oder ein weiter substituierter geradkettiger, verzweigter oder cyclischer Kohlenwasserstoffrest mit Heteroatomen oder ohne Heteroatome,
$R^6$ Wasserstoff oder den Rest der Formel $-CH_2CH_2-SO_2-A$, in dem A wie in Anspruch 1 definiert ist, sowie n und m jeweils ganze Zahlen von 0 bis 12 mit einer Gesamtzahl von 2 bis 12 sind.

9. Verfahren zur Herstellung der in Anspruch 8 definierten wasserlöslichen Azofarbstoffe, dadurch gekennzeichnet, daß wasserlösliche Reaktivfarbstoffe der Formel (Ib) bis (If) nach Anspruch 8, in der X eine Vinylgruppe oder 2-Sulfatoethylgruppe bedeutet, mit Nukleophilen der Formeln $R^1OH$, $NHR^1R^2$, $HSR^1$, $HNR^1NR^2R^3$,

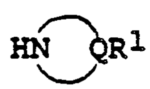

,

$E(OH)_z$ und

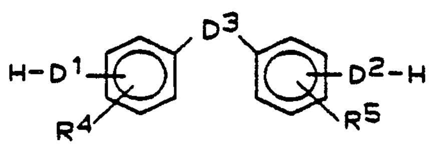

umgesetzt werden, wobei in den Formeln $R^1$, $R^2$ und $R^3$ unabhängig voneinander ein Wasserstoffatom oder einen gegebenenfalls substituierten Alkyl-, Cycloalkyl-, Aralkyl-oder Arylrest oder einen gegebenenfalls substituierten Rest eines aliphatischen oder aromatischen heterocyclischen Systems und Q zusammen mit dem Stickstoffatom ein gegebenenfalls substituiertes aliphatisches oder aromatisches heterocyclisches System bedeuten, wobei die Reste $R^1$, $R^2$ und $R^3$ und der Heterocyclus aus N und Q insbesondere weiter unsubstituiert sind oder durch einen oder mehrere Reste aus der Gruppe Alkyl, Alkoxy, Aryl, Hydroxy, primäres, sekundäres und tertiäres Amino, Nitro, Sulfo, Carboxy, Alkyloxycarbonyl, Aminocarbonyl, Alkylaminocarbonyl, Alkanoylamino und Halogen substituiert sind,
$D^1$ und $D^2$ unabhängig voneinander ein Sauerstoffatom oder eine sekundäre oder tertiäre Aminogruppe, $D^3$ eine direkte Bindung, eine sekundäre oder tertiäre Aminogruppe, Alkylen oder Alkenylen, eine Gruppe der

Formel -O-, -S-, -SO-, $-SO_2-$ oder -CO-, $R^4$ und $R^5$ unabhängig voneinander eine Alkyl-, Alkoxy-, Carboxy- oder Sulfogruppe oder ein Halogenatom sowie E ein weiter nicht substituierter oder ein weiter substituierter geradkettiger, verzweigter oder cyclischer Kohlenwasserstoffrest mit Heteroatomen oder ohne Heteroatome und z eine ganze Zahl von 1 bis 13 bedeuten.

10. Verfahren nach Anspruch 9, dadurch gekennzeichnet, daß die Herstellung der Farbstoffe zusammen mit der Herstellung der Aufzeichnungsflüssigkeiten erfolgt.

11. Aufzeichnungsflüssigkeit, gekennzeichnet durch einen Gehalt an mindestens einem der in einem oder mehreren der Ansprüche 1 bis 4 definierten Farbstoffe der Formel (I).

12. Aufzeichnungsflüssigkeit nach Anspruch 11, gekennzeichnet durch 0,1 bis 20 Gew.-% Farbstoff der Formel (I), bezogen auf das Gewicht der Aufzeichnungsflüssigkeit.

13. Aufzeichnungsflüssigkeit nach Anspruch 11 oder 12, gekennzeichnet durch weniger als 2 Gew.-% Sulfationen und weniger als 0,5 Gew.-% Chloridionen, bezogen auf den Farbstoff der Formel (I).